# DEMANDE DE BREVET EUROPEEN

(11) **EP 1 282 299 A2**
(43) Date de publication de la demande: **05.02.2003**
(21) Numéro de dépôt: 02291949.2
(22) Date de dépôt: 01.08.2002
(51) Int. Cl.: H04M 11/04

(54) **Système de transmission de messages d'alerte pour sauveteurs**

(30) Priorité: 03.08.2001 FR 0110465
(71) Demandeur: FRANCE TELECOM, 75015 Paris (FR)
(72) Inventeur: Le Tortorec-Martin, Valérie, 22300 Lannion (FR); Martin, Jean-Marie, 22300 Lannion (FR); Riou, Stéphane, 22560 Pleumeur-Bodou (FR)
(74) Mandataire: Habasque, Etienne Joel Jean-François

(57) **Abrégé**

Ce système (2) de transmission de messages d'alerte à des sauveteurs comporte :
- des moyens (4) de transmission de messages d'alerte vers les sauveteurs,
- des moyens de commande (6), par un opérateur, de ces moyens de transmission.

Les moyens de transmission (4) comportent :
- au moins un récepteur (20) de messages vocaux équipant un sauveteur,
- des premiers moyens (10) de stockage d'informations contenant au moins un message d'alerte (14) permanent et pré-enregistré, et
- un serveur vocal (12) adapté pour transmettre au moins un message vocal d'alerte établi à partir d'un message d'alerte (14) contenu dans lesdits premiers moyens (10) de stockage d'informations, vers au moins un récepteur (20).

## Description

L'invention concerne un système de transmission de messages d'alerte à des sauveteurs comportant :
- des moyens de transmission de messages d'alerte vers les sauveteurs, et
- des moyens de commande, par un opérateur, de ces moyens de transmission.

Les moyens de transmission connus comportent des récepteurs de radio-messagerie également connus sous le terme de "Pager". Chaque sauveteur est équipé d'au moins un de ces récepteurs de radio-messagerie.

Ces récepteurs de radio-messagerie sont aptes à émettre un signal sonore lors de la réception d'un appel.

Les moyens de commande connus sont formés d'un poste téléphonique standard associé à une liste de numéros de téléphone. Chaque numéro de téléphone de la liste correspond au récepteur d'un des sauveteurs.

Lors de l'émission d'un message d'alerte, un opérateur numérote à l'aide du poste téléphonique standard, un numéro de téléphone choisi dans la liste de numéros de téléphone. Cet appel vers l'un des récepteurs de radio-messagerie déclenche dans ce dernier le signal sonore. Le signal sonore alerte le sauveteur, qui doit alors se rendre sur un lieu prédéfini à l'avance. L'opérateur réitère les opérations précédentes pour l'ensemble des numéros de téléphone sur la liste.

Les systèmes connus sont particulièrement rapides puisque le signal sonore d'alerte retenti quasiment immédiatement après que l'opérateur a fini de numéroter. En effet, contrairement à d'autres moyens de transmission tels que par exemple les messageries électroniques, la transmission d'un signal d'alerte s'effectue quasiment instantanément.

Toutefois, les récepteurs de radio-messagerie utilisés dans les systèmes connus deviennent rapidement obsolescents et il est donc difficile de les remplacer lorsque par exemple l'un de ceux-ci tombe en panne.

L'invention vise donc à remédier à ce problème en proposant un système de transmission de messages d'alerte ne présentant pas de problèmes d'obsolescence et ayant des performances en termes de rapidité au moins égales à celles des systèmes connus.

L'invention a donc pour objet un système de transmission de messages d'alerte à des sauveteurs comportant :
- des moyens de transmission de messages d'alerte vers les sauveteurs, et
- des moyens de commande, par un opérateur, de ces moyens de transmission,
caractérisé en ce que les moyens de transmission comportent :
- au moins un récepteur de messages vocaux équipant un sauveteur,
- des premiers moyens de stockage d'informations contenant au moins un message d'alerte permanent et pré-enregistré, et
- un serveur vocal adapté pour transmettre au moins un message vocal d'alerte établi à partir d'un message d'alerte contenu dans lesdits premiers moyens de stockage d'informations, vers au moins un récepteur.

Le système de transmission de messages d'alerte décrit ci-dessus n'est pas soumis au problème d'obsolescence des récepteurs dont sont équipés les sauveteurs et présente des performances en termes de rapidité au moins égales à celles des systèmes connus. En effet, ce système utilise d'une part, le fait que les dispositifs pour établir une conversation téléphonique entre deux personnes sont constamment réactualisés, et d'autre part, que ces mêmes dispositifs présentent la particularité de joindre très rapidement un destinataire. Ainsi, le système de transmission de messages décrit ci-dessus en utilisant un serveur vocal et des messages vocaux d'alerte ne risque pas de devenir obsolescent puisque des récepteurs de messages vocaux sont sans cesse réactualisés dans le cadre des applications de téléphonies. De plus, le système bénéficie également de la rapidité des dispositifs de téléphonie pour joindre un destinataire.

Suivant d'autres caractéristiques d'un système de transmission de messages d'alerte conforme à l'invention :
- Les moyens de commande comportent :
   - un poste de commande destiné à être utilisé par l'opérateur,
   - un serveur d'informations raccordé par l'intermédiaire d'un réseau de transmission d'informations au poste de commande et associé au serveur vocal, et
   - un logiciel de commande des moyens de transmission de messages d'alerte adapté pour être contrôlé à partir du poste de commande, ce logiciel étant mis en oeuvre par le serveur d'informations.
   - Il comporte des seconds moyens de stockage d'informations dans lesquels est enregistrée une liste de sauveteurs, associés au serveur d'informations et le logiciel de commande comporte un premier module de sélection de sauveteurs dans la liste de sauveteurs et le logiciel de commande est adapté pour contrôler le serveur vocal en fonction des sauveteurs sélectionnés à l'aide du premier module de sélection.
   - II comporte des moyens de stockage d'informations dans lesquels est enregistrée une liste d'identifieurs de message d'alerte, chaque identifieur correspondant à un message d'alerte contenu dans les premiers moyens de stockage d'informations, ces seconds moyens de stockage d'informations étant associés au serveur d'informations, le logiciel de commande comporte un second module de sélection d'un identifieur de message d'alerte dans la liste d'identifieurs de message d'alerte et le logiciel de commande est adapté pour contrôler le serveur vocal en fonction de l'identifieur de message d'alerte sélectionné à l'aide du second module de sélection.
   - Il comporte des moyens d'évaluation du succès de la transmission d'un message d'alerte, le logiciel de commande comporte un indicateur de succès de transmission d'un message vocal d'alerte coopérant avec les moyens d'évaluation et le poste de commande comporte un afficheur de l'état dudit indicateur.
   - Le logiciel de commande comporte un module de saisie de texte, le logiciel de commande est adapté pour transmettre ce texte vers le serveur vocal, le serveur vocal comporte un synthétiseur vocal adapté pour convertir le texte reçu en un message vocal d'informations complémentaires.
   - Les premiers moyens de stockage d'informations comportent des messages d'informations complémentaires, le serveur vocal comporte des moyens d'activation de la transmission de ces messages d'informations complémentaires, et les récepteurs comportent des moyens de commande de ces moyens d'activation.

L'invention sera mieux comprise à la lecture de la description qui va suivre, donnée uniquement à titre d'exemple et faite en se référant aux dessins sur lesquels :
- la figure 1 est une illustration schématique d'une architecture matérielle d'un système de transmission de messages d'alerte conforme à l'invention ; et
- la figure 2 est une illustration schématique de l'architecture logicielle du système de la figure 1.

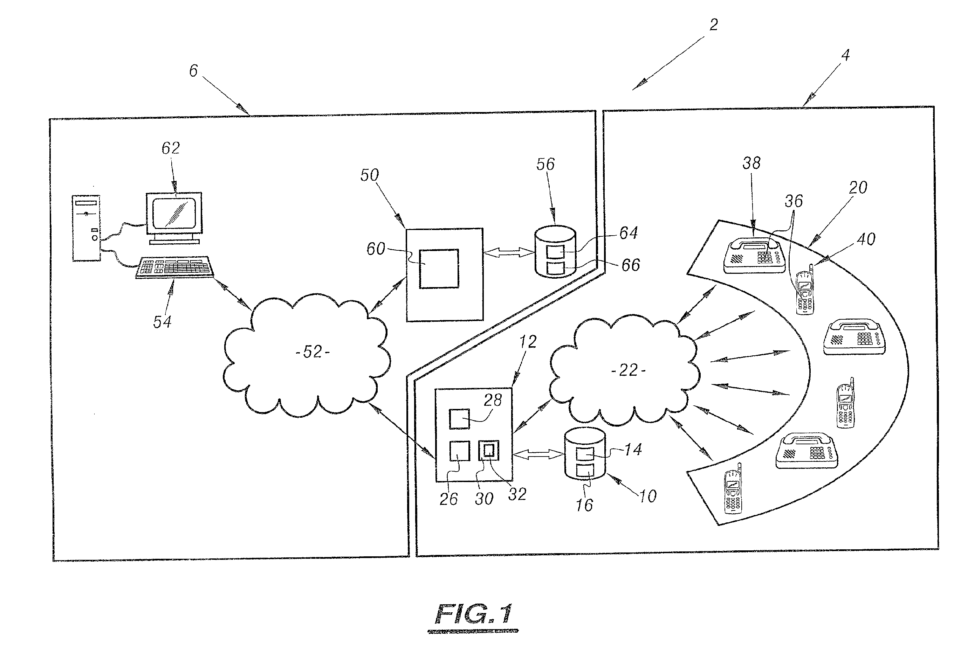

La figure 1 illustre un système 2 de transmission de messages d'alerte à des sauveteurs comportant des moyens 4 de transmission de messages d'alerte contrôlés par un opérateur à partir de moyens 6 de commande.

Les moyens 4 de transmission comportent des premiers moyens 10 de stockage d'informations associés à un serveur vocal 12. Les moyens 10 de stockage d'informations contiennent des messages vocaux d'alerte 14 permanents pré-enregistrés et sont destinés à contenir des messages d'informations complémentaires 16. Les messages vocaux d'alerte 14 sont des signaux sonores enregistrés tandis que les messages d'informations complémentaires sont des textes dactylographiés enregistrés. Les moyens 4 comportent en outre plusieurs récepteurs de messages vocaux 20, chacun détenu par un sauveteur.

Le serveur vocal 12 est adapté pour transmettre simultanément un même message vocal contenu dans les moyens 10 de stockage d'informations, vers les récepteurs de messages vocaux 20 par l'intermédiaire d'un réseau téléphonique 22. Ce serveur vocal 12 comporte notamment un synthétiseur vocal 26, des moyens 28 d'évaluation du succès de la transmission d'un message vocal et des moyens 30 d'échange d'informations.

Le synthétiseur vocal 26 est apte à recevoir un texte dactylographié contenu dans les moyens 10 de stockage d'informations et à transformer ce texte en un message vocal apte à être transmis, par le serveur vocal 12, vers les récepteurs 20.

Les moyens 28 d'évaluation du succès de la transmission d'un message vocal sont aptes à déterminer si un message vocal a été reçu par son destinataire. Ils sont formés ici à partir d'un détecteur de prise de ligne qui détecte si le destinataire du message vocal prend la ligne, c'est-à-dire par exemple si ce dernier décroche son combiné téléphonique.

Les moyens 30 d'échange d'informations sont adaptés pour recevoir des informations transmises à partir d'un récepteur 20 et pour transmettre vers ce même récepteur un message vocal en réponse aux informations reçues. Pour cela, ils comportent ici un module 32 de reconnaissance de tonalité DTMF (Dual Tone Multifrequency).

En variante, le module 32 de reconnaissance de tonalité DTMF est remplacé par un module de reconnaissance vocale apte à établir des instructions de commande à partir de messages vocaux reçus.

Les récepteurs 20 de messages vocaux comportent des moyens 36 de commande des moyens 30 d'activation de la transmission de messages d'informations complémentaires. Ces récepteurs 20 sont par exemple des téléphones fixes 38 ou des téléphones mobiles 40 équipés d'un clavier à plusieurs touches aptes à générer une tonalité DTMF lorsqu'une de ces touches est enfoncée. Ces claviers forment les moyens 36 de commande des moyens 30 d'activation de la transmission de messages d'informations.

Les moyens de commande 6 sont adaptés pour contrôler les moyens 4 de transmission. Ils comportent ici un serveur d'informations 50 raccordé par l'intermédiaire d'un réseau de transmission d'informations 52, d'une part, à un poste de commande 54 et d'autre part, au serveur vocal 12. Les moyens de commande 6 comportent également des seconds moyens 56 de stockage d'informations associés au serveur d'informations 50.

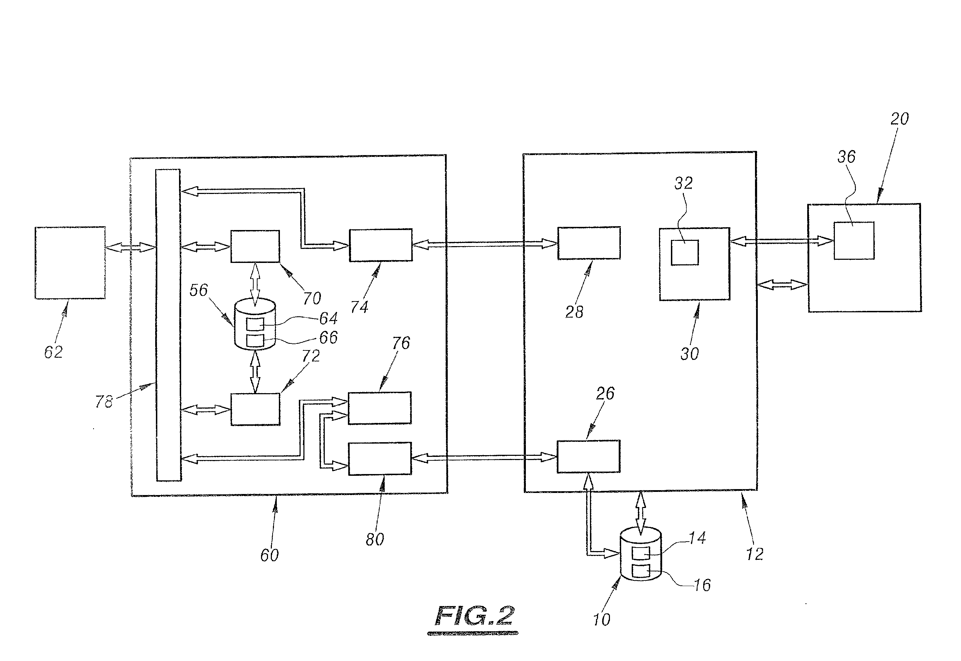

Le serveur d'informations 50 est adapté d'une part, pour recevoir des instructions du poste de commande 54 et d'autre part, pour contrôler le serveur vocal 12 à partir des instructions reçues. Le serveur d'informations 50 est par exemple un serveur Internet comportant un logiciel de commande 60. Ce logiciel de commande 60 sera décrit plus en détail en regard de la figure 2.

Le réseau de transmission d'informations 52 est ici un réseau Internet également connu sous les termes de "World Wide Web" (toile d'araignée mondiale).

Le poste de commande 54 est par exemple un micro-ordinateur équipé d'un navigateur Internet 62.

Le protocole de communication utilisé pour échanger des informations entre le poste de commande 54 et le serveur d'informations 50 par l'intermédiaire du réseau 52 est le protocole HTTP (HyperText Transport Protocol).

Les seconds moyens 56 de stockage d'informations contiennent une liste 64 de sauveteurs et une liste 66 d'identifieurs de message d'alerte. La liste 64 de sauveteurs contient pour chaque sauveteur les informations suivantes :
- le nom du sauveteur,
- un numéro de téléphone fixe pour le joindre sur son téléphone fixe 38;
- un numéro de téléphone mobile pour le joindre sur son téléphone mobile 40;
- un lieu géographique auquel il est rattaché; et
- une ou des fonctions qu'il peut remplir.

La liste d'identifieurs 66 contient autant d'identifieurs que de messages vocaux d'alerte 14 enregistrés dans les premiers moyens 10 de stockage d'informations, chaque identifieur correspondant à un de ces messages vocaux d'alerte.

La figure 2 illustre schématiquement l'architecture du logiciel de commande 60. Ce logiciel 60 est adapté pour recevoir des instructions transmises à partir du poste de commande 54 et pour contrôler le serveur vocal 12. Pour cela, le logiciel 60 comporte en outre un premier et un second modules de sélection 70, 72, des indicateurs 74 de succès de transmission de messages d'alerte, et un module 76 de saisie de textes. Le logiciel de commandes 60 comporte également une interface utilisateur 78 adaptée pour qu'un utilisateur du poste de commande 54 puisse contrôler les différents modules du logiciel 60.

Le premier module de sélection 70 est associé à l'interface utilisateur 78 et à la liste de sauveteurs 64 enregistrée dans les seconds moyens 56 de stockage d'informations. Ce premier module 70 est apte à sélectionner un ou plusieurs sauveteurs dans la liste 64. Le logiciel 60 est apte à contrôler le serveur vocal 12 pour que des messages d'alerte soient transmis aux sauveteurs ainsi sélectionnés.

Le second module de sélection 72 est adapté pour sélectionner un ou plusieurs identifieurs de message d'alerte dans la liste 66. Le logiciel 60 est apte à contrôler le serveur vocal 12 pour que celui-ci n'utilise que le ou les messages vocaux d'alerte correspondant aux identifieurs sélectionnés à l'aide du module de sélection 72.

Les indicateurs 74 sont associés, à l'interface utilisateur 78 et aux moyens 28 d'évaluation du succès d'une transmission d'un message d'alerte contenus dans le serveur vocal 12. Le logiciel 60 comporte autant d'indicateurs de succès de transmission de messages d'alerte que de sauveteurs sélectionnés à l'aide du premier module de sélection 70. Chaque indicateur est associé à un sauveteur de manière à indiquer le succès de la transmission du message d'alerte vers ce sauveteur particulier. Ces indicateurs 74 sont typiquement des variables booléennes. Chacun de ces indicateurs 74 prend la valeur "vrai" si le détecteur 28 indique que la transmission du message d'alerte s'est effectuée avec succès, et "faux" dans le cas contraire.

Le module 76 de saisie de texte est associé à l'interface utilisateur 78. Ce module 76 est adapté pour recevoir une chaîne de caractères dactylographiés constituant une information complémentaire.

Le logiciel 60 comporte également un module 80 de transmission de texte associé au module 76 de saisie de texte et aux moyens 10 de stockage d'informations. Ce module 80 est apte à transmettre et à enregistrer dans les moyens 10 de stockage d'informations, le texte saisi à l'aide du module 76.

L'interface utilisateur 78 est typiquement une page au format HTML comprenant différents scripts aptes à activer les différents modules du logiciel 60. Cette page HTML comprend notamment du code HTML destiné à créer un afficheur de l'état de l'indicateur 74 et un bouton de validation pour activer la transmission d'un message d'alerte.

Le logiciel 60 ainsi que ses différents modules, est réalisé de façon classique à partir de langages de programmation connus.

Le fonctionnement du système 2 de transmission de messages d'alerte va maintenant être décrit à l'aide des figures 1 et 2.

Avant la mise en route du système 2, un administrateur enregistre de façon permanente dans les moyens 10 de stockage d'informations les messages vocaux d'alerte 14 qui seront utilisés par la suite lors du fonctionnement du système.

Lorsqu'un bateau rencontre des difficultés, il émet un signal de détresse qui est transmis à un opérateur du poste 54. L'opérateur de ce poste se connecte alors au serveur d'informations 50. La page HTML 78 est alors chargée par le navigateur Internet 62 du poste de commande 54. Par l'intermédiaire de l'interface utilisateur 78, l'opérateur du poste de commande contrôle le logiciel de commande 60. Il sélectionne les sauveteurs à contacter dans la liste de sauveteurs 64 à l'aide du premier module de sélection 70. Par exemple il sélectionne l'ensemble des sauveteurs d'un lieu géographique particulier. Ensuite, il sélectionne un des identifieurs de messages d'alerte de la liste 66 à l'aide du second module de sélection 72. Eventuellement, il saisit des informations complémentaires à l'aide du module de saisie 76. A l'issue de ces opérations, il valide la transmission du message d'alerte.

Le logiciel de commande 60 transmet et enregistre dans les moyens 10 de stockage d'informations, le texte saisi, à l'aide du module de saisie 76, en tant que message d'informations complémentaires 14.

Le logiciel 60 contrôle alors le serveur vocal 12 à partir des informations sélectionnées par l'opérateur du poste 54, c'est-à-dire, par exemple, les numéros de téléphone des sauveteurs sélectionnés et l'identifieur du message d'alerte sélectionné.

Ainsi, le serveur vocal 12 compose, simultanément, l'ensemble des numéros de téléphone correspondant aux sauveteurs sélectionnés.

Lorsqu'un des sauveteurs contactés décroche le combiné de son téléphone fixe 38 ou de son téléphone mobile 40, c'est-à-dire lorsqu'il prend la ligne, le détecteur 28 détecte et transmet cette information vers le logiciel 60. Le logiciel 60 affecte la valeur "vrai" à l'indicateur 74 correspondant au sauveteur contacté. Ce changement de l'état de cet indicateur 74 est alors reflété dans la page HTML chargée par le poste de commande 54 par un afficheur de l'état de cet indicateur 74. L'opérateur du poste de commande 54 est ainsi informé du succès de la transmission du message d'alerte vers chaque sauveteur sélectionné.

Ensuite, le serveur vocal 12 transmet le message vocal d'alerte 14 correspondant à l'identifieur sélectionné, vers le téléphone du sauveteur. Eventuellement si les moyens 10 de stockage d'informations comportent des messages d'informations complémentaires, ceux-ci sont automatiquement transmis à la fin du message vocal d'alerte. Les messages d'informations complémentaires sont toutefois d'abord transformés en messages vocaux par le synthétiseur vocal 26 avant d'être transmis sur le réseau téléphonique 22.

A l'issue de la réception des messages vocaux d'alerte et d'informations complémentaires, le sauveteur échange des informations avec le serveur vocal 12. Il peut s'agir d'informations telles qu'un code l'identifiant ou d'un accusé de réception des messages vocaux. Ces informations sont transmises à l'aide du clavier 36 de son téléphone.

Le module 32 de reconnaissance de tonalité DTMF du serveur vocal 12 reconnaît la tonalité générée par l'enfoncement des touches et transmet cette information aux moyens 30 d'échange d'informations. Ces moyens 30, en fonction de la touche enfoncée, active en réponse, par exemple, la transmission d'un message vocal.

Enfin le sauveteur, raccroche son combiné téléphonique.

En variante, les messages d'alerte 14 sont des textes dactylographiés enregistrés. Dans cette variante, les messages d'alerte sont d'abord transformés en messages vocaux par le synthétiseur vocal 26 avant d'être transmis sur le réseau téléphonique 22.

Le système décrit, permet le contrôle à distance, des moyens 4 de transmission de messages d'alerte. En particulier, puisque les messages d'alerte sont enregistrés dans des moyens de stockage d'informations associés au serveur vocal 12, il n'est pas nécessaire de les transmettre à ce dernier par l'intermédiaire d'un réseau de transmission d'informations 52. Ainsi, le système décrit s'affranchit du délai de transmission d'un message d'alerte entre le poste de commande 54 et le serveur d'informations 50.

Le serveur vocal transmet simultanément les messages d'alerte à plusieurs sauveteurs ce qui se traduit par un gain de temps.

Le système décrit comporte un module de saisie de texte associé à un poste de commande distant, l'échange d'informations entre ce module et le poste s'effectuant par l'intermédiaire d'un protocole de communication permettant un échange des informations quasi-instantané. Ainsi, la transmission à partir du poste de commande vers le serveur vocal 12 d'informations complémentaires est effectuée très rapidement.

## Revendications

1. Système (2) de transmission de messages d'alerte à des sauveteurs comportant :
- des moyens (4) de transmission de messages d'alerte vers les sauveteurs, et
- des moyens de commande (6), par un opérateur, de ces moyens de transmission (4),
**caractérisé :**
- **en ce que** les moyens de transmission (4) comportent :
- au moins un récepteur (20) de messages vocaux équipant un sauveteur,
- des premiers moyens (10) de stockage d'informations contenant au moins un message d'alerte (14) permanent et pré-enregistré, et
- un serveur vocal (12) adapté pour transmettre au moins un message vocal d'alerte établi à partir d'un message d'alerte (14) contenu dans lesdits premiers moyens (10) de stockage d'informations, vers au moins un récepteur (20),
- **en ce que** les premiers moyens (10) de stockage d'informations comportent des messages d'informations complémentaires (16),
- **en ce que** le serveur vocal (12) comporte des moyens (30) d'activation de la transmission de ces messages d'informations complémentaires, et
- **en ce que** le ou chaque récepteur (20) comporte des moyens (36) de commande de ces moyens d'activation (30).

2. Système (2) selon la revendication 1, **caractérisé en ce que** les moyens de commande (6) comportent :
- un poste de commande (54) destiné à être utilisé par l'opérateur,
- un serveur d'informations (50) raccordé par l'intermédiaire d'un réseau de transmission d'informations (52) au poste de commande (54) et associé au serveur vocal (12), et
- un logiciel (60) de commande des moyens (4) de transmission de messages d'alerte adapté pour être contrôlé à partir du poste de commande (54), ce logiciel étant mis en oeuvre par le serveur d'informations (50).

3. Système (2) selon la revendication 2, **caractérisé en ce qu'**il comporte des seconds moyens (56) de stockage d'informations dans lesquels est enregistrée une liste (64) de sauveteurs, associés au serveur d'informations (50), **en ce que** le logiciel de commande (60) comporte un premier module (70) propre à permettre à un opérateur de sélectionner le ou les sauveteurs dans la liste (64) de sauveteurs, et **en ce que** le logiciel de commande (60) est adapté pour contrôler le serveur vocal (12) en fonction des sauveteurs sélectionnés à l'aide du premier module de sélection (70).

4. Système (2) selon l'une quelconque des revendications 2 à 3, **caractérisé en ce qu'**il comporte des seconds moyens (56) de stockage d'informations dans lesquels est enregistrée une liste (66) d'identifieurs de message d'alerte, chaque identifieur correspondant à un message d'alerte contenu dans les premiers moyens (10) de stockage d'informations, ces seconds moyens (56) de stockage d'informations étant associés au serveur d'informations (50), **en ce que** le logiciel de commande (60) comporte un second module (72) de sélection d'un identifieur de message d'alerte dans la liste (66) d'identifieurs de message d'alerte, et **en ce que** le logiciel de commande (60) est adapté pour contrôler le serveur vocal (12) en fonction de l'identifieur de message d'alerte sélectionné à l'aide du second module (72) de sélection.

5. Système (2) selon l'une quelconque des revendications 2 à 4, **caractérisé en ce que** le serveur vocal (12) comporte des moyens (28) d'évaluation du succès de la transmission d'un message d'alerte, **en ce que** le logiciel de commande (60) comporte plusieurs indicateurs (74) de succès de transmission d'un message vocal d'alerte, chaque indicateur (74) étant associé à un sauveteur de manière à indiquer le succès de la transmission du message d'alerte vers ce sauveteur particulier, et chaque indicateur (74) coopérant avec les moyens d'évaluation (28), et **en ce que** le poste de commande (54) comporte un afficheur de l'état de chacun desdits indicateurs.

6. Système (2) selon l'une quelconque des revendications 2 à 5, **caractérisé en ce que** le logiciel de commande (60) comporte un module (76) de saisie de texte, **en ce que** le logiciel de commande (60) est adapté pour transmettre ce texte vers le serveur vocal (12), et **en ce que** le serveur vocal (12) comporte un synthétiseur vocal (26) adapté pour convertir le texte reçu en un message vocal d'informations complémentaires.
